# EUROPÄISCHE PATENTSCHRIFT

(11) **EP 1 780 454 B1**
(45) Veröffentlichungstag und Bekanntmachung des Hinweises auf die Patenterteilung: **11.03.2009**
(21) Anmeldenummer: 06017715.1
(22) Anmeldetag: 25.08.2006
(51) Int. Cl.: F16K 31/26

(54) **Vorrichtung zum selbsttätigen Nachfüllen von Flüssigkeiten**
Device for automatic refilling of liquids
Dispositif destiné au remplissage automatique de liquides

(30) Priorität: 25.10.2005 DE 102005051327
(43) Veröffentlichungstag der Anmeldung: 02.05.2007
(73) Patentinhaber: Honeywell Technologies Sarl ECC, 1110 Morges (CH)
(72) Erfinder: Kövari, Ulrich, 74865 Neckarzimmern (DE)
(74) Vertreter: Graefe, Jörg

(56) Entgegenhaltungen:
- WO-A-01/20209
- DE-U- 1 903 480
- GB-A- 479 241
- GB-A- 2 176 873

## Beschreibung

Die Erfindung betrifft eine Vorrichtung zum selbsttätigen Nachfüllen von Flüssigkeiten umfassend ein Gehäuse mit einem Einlauf und einem Auslauf, einem Ventilsitz, einem mit dem Ventilsitz zusammenwirkenden Sperrmittel, das in einer ersten Stellung zumindest mittelbar an dem Ventilsitz anliegt und den Weg für eine Flüssigkeit vom Einlauf zum Auslauf versperrt und in einer zweiten Stellung mit Abstand vom Ventilsitz angeordnet ist und den Weg vom Einlauf zum Auslauf freigibt.

Aus dem Stand der Technik sind derartige Vorrichtungen zum selbsttätigen Nachfüllen von Flüssigkeiten zum Beispiel zur Regelung des Füllstands in einem Behälter seit geraumer Zeit bekannt (z. B. aus den Druckschriften DE PS 568 753 und DE PS 628 844). Derartige Vorrichtungen umfassen üblicherweise einen im Behälter befindlichen Schwimmkörper, der bei Erreichen einer gewünschten Füllhöhe durch sein Aufschwimmen über eine Hebelanordnung ein Ventil, gebildet aus den Sperrmitteln und dem Ventilsitz, schließt. Bei diesem Schließvorgang entspricht die über die Auftriebskraft des Schwimmkörpers aufzubringende Kraft mindestens der zum Schließen des Ventils erforderlichen Schließkraft. Beim Absinken des Flüssigkeitsstandes im Behälter wird die durch die Gravitation hervorgerufene Sinkkraft des absinkenden Schwimmkörpers dafür verwendet, das Ventil über dieselbe Hebelarmanordnung wieder zu öffnen, wobei die hierzu notwendige Öffnungskraft des Ventils erreicht oder überschritten werden muss.

Aus dem Stand der Technik sind ferner Unterarten der genannten Vorrichtung bekannt, bei welcher die zum Öffnen und Schließen des Ventils, gebildet aus dem Sperrmittel und dem Ventilsitz, erforderlichen Kräfte nicht direkt auf das Ventil einwirken, sondern zusätzlich durch ein oder mehrere Federn wirken, wobei die Federn beispielsweise bewirken, dass das Ventil stets geschlossen ist, es sei denn, dass über die Hebelanordnung eine Auftriebkraft des Auftriebskörpers übertragen wird, welche die Ventilöffnungskraft aufbringt.

Ein Nachteil der Vorrichtungen, die aus dem Stand der Technik bekannt sind, ist, dass die über den Schwimmkörper aufzubringenden Kräfte zum Öffnen beziehungsweise Schließen des Ventil bestehend aus dem Sperrmittel und dem Ventilsitz von dem im Leitungssystem auf der Einlaufseite der Vorrichtung vorherrschenden Druck abhängig sind. Üblicherweise behilft man sich derzeit durch die Verwendung von Schwimmkörpern mit verschiedenen Auftriebseigenschaften, wobei jedem im Leitungssystem auf der Einlaufseite herrschenden Druck ein Auftriebskörper eines Typs zugeordnet ist. Derartige Lösungen stoßen jedoch insbesondere bei stark schwankenden Druckverhältnissen im Leitungssystem auf der Einlaufseite schnell an ihre Einsatzgrenzen. Eine sichere Regelung ist dann nicht möglich. Grundsätzlich kann zwar immer ein Druckminderer oder Druckregler vorgeschaltet werden, dies stellt jedoch einen erheblichen zusätzlichen Aufwand dar. Außerdem ist aus der Druckschrift DE GM 19 03 480 eine Vorrichtung der eingangs genannten Art in einem geringen Umfang ein Druckausgleich erreicht wird. Bei größeren Druckunterschieden versagt die Vorrichtung jedoch. Außerdem ist diese Vorrichtung wegen einer außerhalb des Gehäuses liegenden Mechanik zum Druckausgleichen stark störungsanfällig.

Aus der Druckschrift mit der Veröffentlichungsnummer GB 2 176 873 A ist eine Vorrichtung der eingangs genannten Art bekannt, bei der das Sperrmittel zumindest in der ersten Stellung, d. h. in der Sperrstellung einlaufseitig und auslaufseitig gleiche druckwirksame Flächen hat. Die Vorrichtung ist somit druckausgeglichen, so dass Druckschwankungen im die Flüssigkeit zuführenden System keine Auswirkungen auf die Stellung des Sperrmittels haben.

Die in der genannten Druckschrift mit der Veröffentlichungsnummer GB 2 176 873 offenbarte gattungsbildende Vorrichtung weist ein Sperrmittel auf, dass im Wesentlichen zylindrisch geformt ist. An den stirnseitigen Enden des zylindrischen Sperrmittels sind die beiden gleichen, druckwirksamen Flächen ausgebildet, die jeweils zusammen mit dem Gehäuse der Vorrichtung je einen mit der Flüssigkeit gefüllten Raum ausbilden. Die beiden Räume sind zur Herstellung des Druckausgleichs über eine durch das Sperrmittel geführte Leckageleitung miteinander verbunden. Diese Ausgestaltung der in der genannten Druckschrift offenbarten Vorrichtung führt zu einem großem Volumen der Vorrichtung. Die Vorrichtung ist dadurch bei beengten Platzverhältnissen nicht oder nur mit Schwierigkeiten einsetzbar. Darüber hinaus ist die Schaffung der beiden über die Leckageleitung miteinander verbunden, druckausgeglichenen Räume ein aufwändige Abdichtung notwendig.

Der Erfindung liegt das Problem zugrunde, eine druckausgeglichene Vorrichtung zum selbsttätigen Nachfüllen von Flüssigkeiten vorzuschlagen, die eine kompakte Bauart hat und den Druckausgleich mit einfach gestalteten Sperrmittel erreicht.

Dieses Problem wird erfindungsgemäß durch eine Vorrichtung mit den Merkmalen des Anspruchs 1 gelöst. Das Sperrmittel ist druckausgeglichen und hat zumindest in der ersten Stellung einlaufseitig und auslaufseitig gleiche druckwirksame Flächen. Die zum Verbringen des Sperrmittels von der ersten Stellung in die zweite Stellung und umgekehrt notwendige Kraft ist damit unabhängig von dem im Leitungssystem herrschenden Druck. Damit kann auch der Auftriebskörper, welcher die Schließkraft oder Öffnungskraft des Ventils aus Sperrmittel und Ventilsitz aufbringt unabhängig vom Druck im Leitungssystem dimensioniert werden.

Das Sperrmittel der erfindungsgemäßen Vorrichtung umfasst eine Düse und eine Spindel. Die Spindel des Sperrmittels der erfindungsgemäßen Vorrichtung ist durch eine Ausnehmung des Ventilsitzes hindurchgeführt. Dadurch ist eine kompakte Bauart der erfindungsgemäßen Vorrichtung möglich.

Die Düse und die Spindel können fest miteinander verbunden sein. Die Düse hat vorteilhaft auslaufseitig eine druckwirksame Fläche, die um den Betrag der einlaufseitigen druckwirksamen Fläche der Spindel größer ist als die einlaufseitige druckwirksame Fläche der Düse. Damit hat das Sperrmittel einlaufseitig eine druckwirksame Fläche, die sich aus der druckwirksamen Fläche der Düse und der druckwirksamen Fläche der Spindel zusammensetzt. Auslaufseitig hat die Spindel keinen Beitrag zur druckwirksamen Fläche des Sperrmittels, so dass die auslaufseitige druckwirksame Fläche ausschließlich durch die druckwirksame Fläche der auslaufseitig vergrößerten Düse bestimmt wird. Eine solche Vergrößerung kann in einer Aufweitung bestehen. Somit sind insgesamt die ein- und auslaufseitig auf die Düse wirkenden Druckkräfte betragsgleich.

Die Spindel des Sperrmittels kann aus einem Metall, insbesondere aus rostfreiem Stahl bestehen. Es ist aber auch möglich, die Spindel gemeinsam mit der Düse einstückig aus Kunststoff herzustellen. Die Düse kann dagegen vorzugsweise aus einem Kunststoff bestehen. Auch der Ventilsitz kann aus einem Kunststoff, beispielsweise aus dem gleichen Kunststoff wie die Düse bestehen. Durch die Ausbildung des Ventilsitzes aus Kunststoff werden Ausstrahleffekte und Ablagerungen, insbesondere durch Kalk, minimiert.

Der Ventilsitz ist vorteilhaft nicht einstückig mit dem Gehäuse verbunden. Der Ventilsitz kann vielmehr in das Gehäuse eingesetzt, vorteilhaft in das Gehäuse eingesteckt sein. Besonders vorteilhaft wird der Ventilsitz zusammen mit Spindel und Düse in einer gemeinsamen Baugruppe gefertigt, so dass zu Wartungszwecken eine einfache Austauschbarkeit gegeben ist.

An dem Ventilsitz kann ein Dichtmittel, insbesondere ein Dichtring angeordnet sein, an welchem das Sperrmittel in der ersten Stellung anliegt.

Das Dichtmittel kann mittels einer gelochten Schraube an dem Ventilsitz befestigt sein.

Es ist möglich, dass die Spindel durch die gelochte Schraube hindurchgeführt ist. Die Spindel, an deren einlaufseitigem Ende dann vorteilhaft die Düse befestigt ist, ist mit ihrem anderen Ende bezogen auf die Düse jenseits des Ventilsitzes angeordnet.

Eine erfindungsgemäße Vorrichtung kann ein Koppelmittel aufweisen, mit dem eine Kopplung mit einer Hebelanordnung und einem Schwimmkörper hergestellt ist. Das Koppelmittel muss mit dem Sperrmittel, insbesondere mit der Spindel fest verbunden sein. Vorzugsweise ist das Koppelmittel mit dem bezüglich der Düse jenseits vom Ventilsitz liegenden Ende der Spindel fest verbunden.

Zwei Ausführungsbeispiele für erfindungsgemäße Vorrichtungen zum selbsttätigen Nachfüllen von Flüssigkeiten sind anhand der Zeichnungen näher beschrieben. Es zeigt:

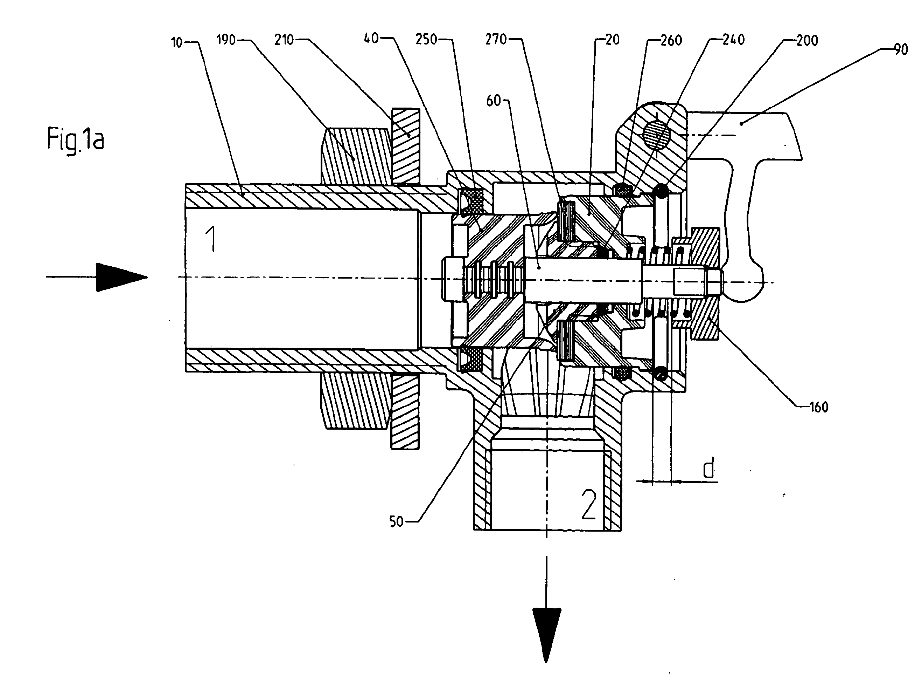

- Fig. 1a: einen Schnitt durch einen Teil des ersten Ausführungsbeispiels,
- Fig. 1 b: eine Seitenansicht des ersten Ausführungsbeispiels,
- Fig. 2a: einen Schnitt durch einen Teil des zweiten Ausführungsbeispiels und
- Fig. 2b: eine Seitenansicht des zweiten Ausführungsbeispiels.

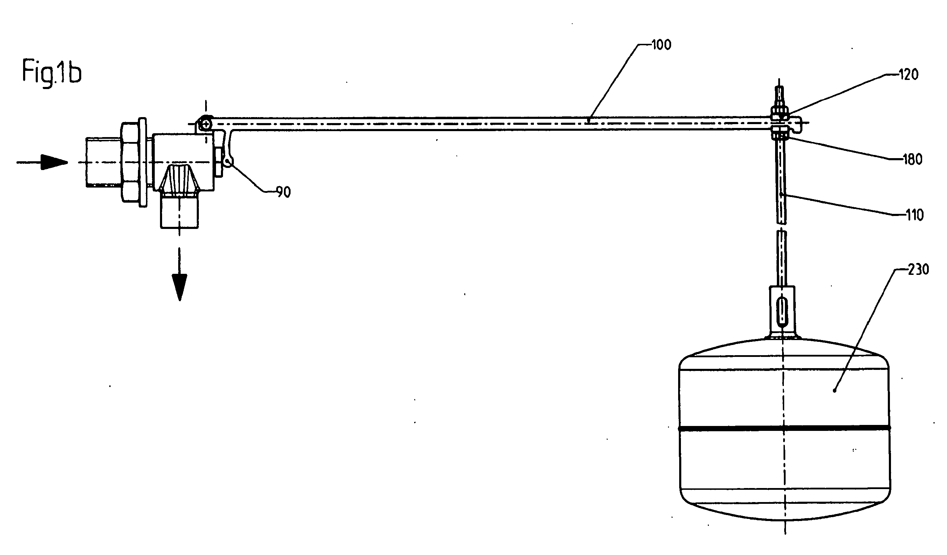

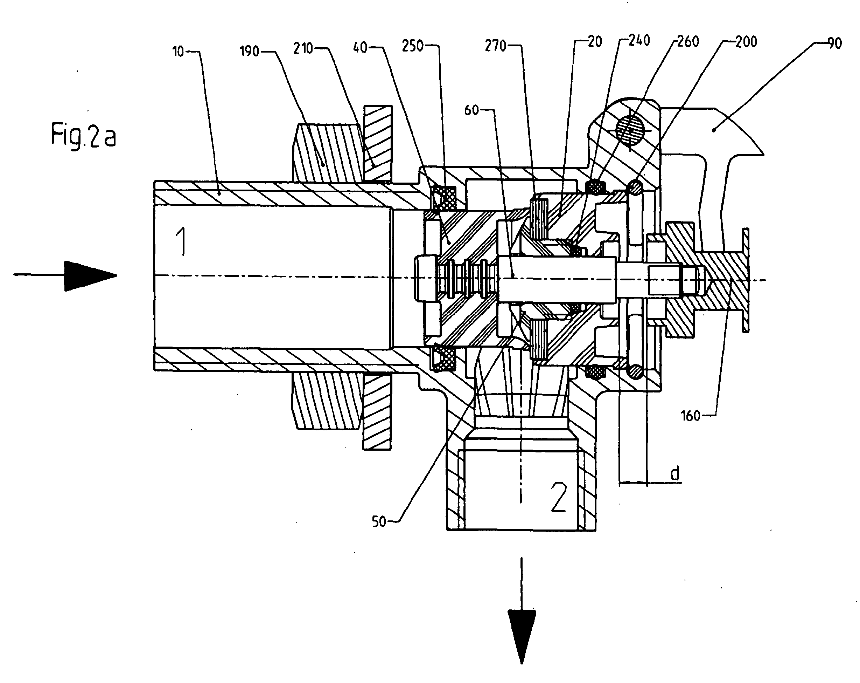

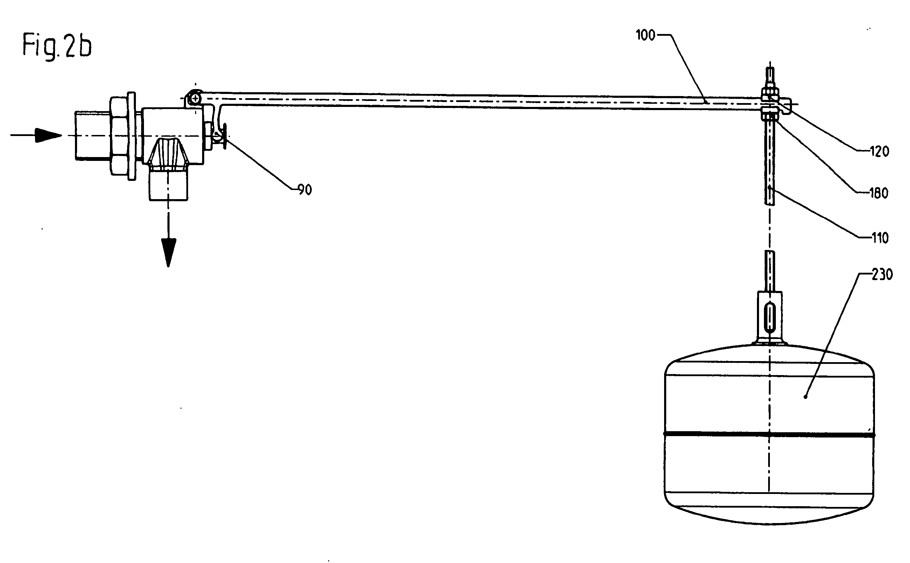

Die beiden Ausführungsbeispiele gemäß der Fig. 1a, 1b beziehungsweise Fig. 2a, 2b entsprechen in weiten Teilen einander. Deshalb wird unter Bezugnahme auf alle Figuren nachstehend der Aufbau und die Funktionsweise der Ausführungsbeispiele erläutert. Auf Unterschiede zwischen beiden Ausführungsbeispielen wird besonders hingewiesen.

Die Ausführungsbeispiele weisen ein Gehäuse 10 mit einem Einlaufstutzen 1 und einem Auslaufstutzen 2 auf. Mit dem Einlaufstutzen 1 kann das Gehäuse 10 in der Wand eines nicht dargestellten Behälters montiert werden, wozu eine Scheibe 210 und Mutter 190 verwendet werden können. Die Armatur befindet sich also innerhalb des Behälters. An ihren Einlaufstutzen 1, der mit seinem freien Ende aus der Behälterwand herausragt, kann eine Zuführleitung angeschlossen werden.

Der Einlaufstutzen 1 und der Auslaufstutzen 2 sind - wie dargestellt - im rechten Winkel oder in einem anderen Winkel zueinander angeordnet. Im Schnittbereich des Einlaufstutzens 1 und der Mittelachse des Auslaufstutzens 2 ist ein Sperrmittel 40, 60 und ein Ventilsitz 20 angeordnet, über welche die fluidische Verbindung zwischen dem Einlaufstutzen 1 und dem Auslaufstutzen 2 gesteuert werden kann. Der aus Kunststoff hergestellte Ventilsitz 20 ist als Einsteckteil ausgeführt, das in das Gehäuse 10 eingesetzt ist, mit einem Sicherungsring 200 fixiert wird und über eine Dichtung 260 abgedichtet ist.

Der Ventilsitz 20 weist eine zentrale Ausnehmung auf, die in einem weiteren Abschnitt ein Innengewinde hat. In dieses Innengewinde ist eine gelochte Schraube 50 aus Kunststoff eingeschraubt, mittels derer ein Dichtungsring 270 - ebenfalls aus Kunststoff - an dem Ventilsitz 20 angebracht ist.

Durch das zentrale Loch der Schraube 50 und die zentrale Ausnehmung des Ventilsitzes 20 ist eine Spindel 60 aus Metall des Sperrmittels hindurchgeführt. Die Spindel 60 ist gegenüber der Schraube 50 über einen Dichtungsring 240 abgedichtet. An dem eingangsstutzenseitigen Ende der Spindel 60 ist eine Kunststoffhülse 40 befestigt. Das gegenüberliegende Ende der Spindel ist dagegen fest mit einem Koppelmittel 160 verbunden.

Die Hülse 40 dient als Düse des Sperrmittels 40, 60. Die Düse 40 ist im Querschnitt nach Art eines Speichenrades gestaltet. Mit dem äußeren Radius wird die Düse 40 von der Innenwandung des Gehäuses 10 geführt, gegenüber der sie über eine Dichtung 250 abgedichtet ist. Die Düse 40 ist in ihrem Inneren mit der Spindel 60 verbunden. Die Zwischenräume zwischen den Speichen erlauben eine Flüssigkeitsströmung durch die Düse 40.

Das sitzseitige Ende der Düse ist aufgeweitet und liegt in einer ersten Stellung - wie sie in Fig. 1 a und 2a dargestellt ist - an dem Ventilsitz 20 unter Zwischenschaltung des Dichtungsrings 270 an. In dieser Stellung kann zwar eine Flüssigkeit, die vom Eingangsstutzen in die erfindungsgemäße Vorrichtung einströmt, die Düse 40 durchsetzen, wird aber dann durch die Anlage der Düse 40 an dem Ventilsitz 20 an einem Austritt durch den Auslaufstutzen gehindert. Die druckwirksame Fläche der Düse 40 ist einlaufstutzenseitig sowie auslaufbeziehungsweise sitzseitig gleich. Dadurch sind die in der ersten Stellung der Düse 40 von der Flüssigkeit einlaufstutzenseitig und auslauf- beziehungsweise sitzseitig der Düse 40 ausgeübten Druckkräfte betragsgleich und entgegengerichtet, das Sperrmittel 40, 60 ist somit druckausgeglichen. Das Sperrmittel 40, 60 ist druckausgeglichen. Dieses wird dadurch erreicht, dass die druckwirksame Fläche der Düse 40 auslaufseitig um den Betrag vergrößert ist, den die einlaufstutzenseitig druckwirksame Fläche der Spindel 60 zur einlaufstutzenseitigen druckwirksamen Fläche des Sperrmittels 40, 60 beiträgt. Diese zusätzliche, den Druckausgleich bewirkende druckwirksame Fläche auf der Auslauf- beziehungsweise Sitzseite der Düse 40 wird durch Aufweitung der Düse auf der Auslauf- beziehungsweise Sitzseite erreicht.

Zum Ansteuern des Sperrmittels 40, 60 ist das Sperrmittel 40, 60 über das Koppelmittel 160 mit einer Hebelanordnung 90, 100, 110 mit einem Schwimmkörper 230 verbunden. Die Position des Schwimmkörpers 230 wird vom Flüssigkeitsstand im Behälter bestimmt. Der Schwimmkörper überträgt damit je nach Position eine Kraft zum Verschieben des Sperrmittels 40, 60 in eine zweite Stellung, in welcher eine fluidische Verbindung zwischen dem Einlaufstutzen 1 und dem Auslaufstutzen 2 zum Befüllen des Behälters besteht. Das Kopplungsmittel sowie das damit verbundene Sperrmittel führen bei dieser Bewegung maximal einen Hub aus, wie er in der Zeichnung mit "d" gekennzeichnet ist.

In der Art der Kopplung zwischen dem Kopplungsmittel 160 und der Hebelanordnung sowie über das Aufbringen einer Rückstellkraft zum Verbringen des Sperrmittels 40, 60 von der zweiten Stellung zurück in die erste Stellung unterscheiden sich die beiden Ausführungsbeispiele gemäß der Fig. 1 a und 1 b einerseits und der Fig. 2a und 2b andererseits.

Beim ersten Ausführungsbeispiel gemäß der Fig. 1a, 1b liegt ein Betätigungssporn 90 der Hebelanordnung 90, 100, 110 lose an dem Koppelmittel 160 an, dagegen ist der Betätigungssporn 90 beim zweiten Ausführungsbeispiel gemäß der Fig. 2a, 2b gelenkig mit dem Koppelmittel 160 verbunden. Beim ersten Ausführungsbeispiel kann mittels des Hebels 90, 100 nur eine Druckkraft auf das Koppelmittel und somit auf das Sperrmittel 40, 60 ausgeübt werden. Beim zweiten Ausführungsbeispiel können dagegen sowohl Druck- als auch Zugkräfte von dem Hebel 90, 100 auf das Koppelmittel 160 und somit auf das Sperrmittel 40, 60 übertragen werden. D. h., beim zweiten Ausführungsbeispiel kann sowohl die Kraft zum Verbringen des Sperrmittels 40, 60 von der ersten in die zweite Stellung über die Hebelanordnung und den Schwimmkörper 230 aufgebracht werden als auch die Kraft um das Sperrmittel 40, 60 von der zweiten Stellung in die erste Stellung zu bewegen. Beim ersten Ausführungsbeispiel kann dagegen mittels der Hebelanordnung und dem Schwimmkörper 230 lediglich die Kraft zum Verbringen der Sperrmittel von der ersten in die zweite Stellung aufgebracht werden.

Zum Zurückbringen der Sperrmittel 40, 60 aus der zweiten Stellung in die erste Stellung weist das erste Ausführungsbeispiel eine Feder 70 auf, die sich einerseits auf dem Ventilsitz 20 und andererseits auf dem Koppelmittel 160 abstützt und dieses mitsamt dem daran verbundenen Sperrmittel 40, 60 in die zweite Stellung drückt.

Die Hebelanordnungen umfassen neben dem Hebel 90, 100 eine Stange 110, die einerseits über eine verschiebbare und höhenverstellbare Verschraubung mit dem Hebel 90, 100 und andererseits mit dem Schwimmkörper 230 verbunden ist.

## Patentansprüche

1. Vorrichtung zum selbsttätigen Nachfüllen von Flüssigkeiten umfassend ein Gehäuse (10) mit einem Einlauf (1) und einem Auslauf (2), einen Ventilsitz (20), einem mit dem Ventilsitz (20) zusammenwirkenden Sperrmittel (40, 60), wobei das Sperrmittel in einer ersten Stellung an dem Ventilsitz (20) anliegt und den Weg für eine Flüssigkeit vom Einlauf zum Auslauf versperrt und in einer zweiten Stellung mit Abstand vom Ventilsitz (20) angeordnet ist und den Weg vom Einlauf zum Auslauf freigibt und wobei das Sperrmittel (40, 60) zumindest in der ersten Stellung einlaufseitig und auslaufseitig gleiche druckwirksame Flächen hat,
**dadurch gekennzeichnet, dass**
das Sperrmittel (40, 60) eine Düse (40) und eine Spindel (60) umfasst und die Spindel (60) durch eine Ausnehmung des Ventilsitzes (20) hindurchgeführt ist.

2. Vorrichtung nach Anspruch 1 , **dadurch gekennzeichnet, dass** die Düse (40) einlaufseitig eine druckwirksame Fläche hat, die um den Betrag der einlaufseitigen druckwirksamen Fläche der Spindel (60) kleiner ist als die auslaufseitige druckwirksame Fläche der Düse (40).

3. Vorrichtung nach einem der Ansprüche 2, **dadurch gekennzeichnet, dass** die Düse (40) aus einem Kunststoff besteht.

4. Vorrichtung nach einem der Ansprüche 1 bis 3, **dadurch gekennzeichnet, dass** der Ventilsitz (20) nicht einstückig mit dem Gehäuse verbunden ist.

5. Vorrichtung nach Anspruch 4, **dadurch gekennzeichnet, dass** der Ventilsitz (20) in das Gehäuse (10) eingesteckt ist.

6. Vorrichtung nach einem der Ansprüche 1 bis 5, **dadurch gekennzeichnet, dass** die Vorrichtung ein Koppelmittel (160) zur Kopplung mit einer Hebelanordnung (90, 100, 110) und einem Schwimmkörper (230) aufweist.

7. Vorrichtung nach Anspruch 6, **dadurch gekennzeichnet, dass** das Koppelmittel (160) fest mit dem Sperrmittel (20, 60), insbesondere der Spindel (60) verbunden ist.

8. Vorrichtung nach einem der Ansprüche 1 bis 7, **dadurch gekennzeichnet, dass** die Vorrichtung eine Feder (Fig. 1, 70) zum Drücken des Sperrmittels (20, 60) in eine der beiden Stellungen umfasst.

9. Vorrichtung nach Anspruch 8, **dadurch gekennzeichnet, dass** die Hebelanordnung (90, 100, 110) einen Hebel (90) umfasst, der das Koppelmittel (160) in die jeweils andere Stellung drückt.

10. Vorrichtung nach Anspruch 8 oder 9, **dadurch gekennzeichnet, dass** die Feder (Fig. 1, 70) einerseits an dem Koppelmittel (160) und andererseits auf dem Ventilsitz (20) abgestützt ist.

11. Vorrichtung nach Anspruch 7, **dadurch gekennzeichnet, dass** das, Koppelmittel (160) mit einem Betätigungssporn (90) verbunden ist, der je nach Position des Schwimmkörpers (230) das Sperrmittel (40, 60) in die erste Stellung, in die zweite Stellung oder in eine Zwischenstellung zwischen der ersten und der zweiten Stellung drückt.

12. Vorrichtung nach Anspruch 11, **dadurch gekennzeichnet, dass** der Betätigungssporn (90) mit dem Koppelmittel (160) gelenkig verbunden ist.

## Claims

1. Device for the automatic refilling of liquids, comprising a housing (10) with an inflow (1) and an outflow (2), a valve seat (20), and a shut-off means (40, 60) cooperating with the valve seat (20), the shut-off means, in a first position, bearing against the valve seat (20) and shutting off the path for liquid from the inflow to the outflow and, in a second position, being arranged at a distance from the valve seat (20) and releasing the path from the inflow to the outflow, and the shut-off means (40, 60), at least in the first position, having identical pressure-active faces on the inflow side and the outflow side, **characterized in that** the shut-off means (40, 60) comprises a nozzle (40) and a spindle (60), and the spindle (60) is lead through a recess of the valve seat (20).

2. Device according to Claim 1, **characterized in that** the nozzle (40) has on the inflow side a pressure-active face which is smaller than the outflow-side pressure-active face of the nozzle (40) by the amount of the inflow-side pressure-active face of the spindle (60).

3. Device according to either of Claims 1 and 2, **characterized in that** the nozzle (40) consists of a plastic.

4. Device according to one of Claims 1 to 3, **characterized in that** the valve seat (20) is not connected in one piece to the housing.

5. Device according to Claim 4, **characterized in that** the valve seat (20) is plugged into the housing (10).

6. Device according to one of Claims 1 to 5, **characterized in that** the device has a coupling means (160) for coupling to a lever arrangement (90, 100, 110) and to a float body (230).

7. Device according to Claim 6, **characterized in that** the coupling means (160) is connected fixedly to the shut-off means (40, 60), in particular to the spindle (60).

8. Device according to one of Claims 1 to 7, **characterized in that** the device comprises a spring (Fig. 1, 70) for pressing the shut-off means (20, 60) into one of the two positions.

9. Device according to Claim 8, **characterized in that** the lever arrangement (90, 100, 110) comprises a lever (90) which presses the coupling means (160) into the other position in each case.

10. Device according to Claim 8 or 9, **characterized in that** the spring (Fig. 1, 70) is supported, on the one hand, on the coupling means (160) and, on the other hand, on the valve seat (20).

11. Device according to Claim 7, **characterized in that** the coupling means (160) is connected to an actuating spur (90) which, depending on the position of the float body (230), presses the shut-off means (40, 60) into the first position, into the second position or into an intermediate position between the first and the second position.

12. Device according to claim 11, **characterized in that** the actuating spur (90) is connected to the coupling means (160) in an articulated manner.

## Revendications

1. Dispositif destiné au remplissage automatique de liquides, comprenant un botter (10) avec une entrée (1) et une sortie (2), un siège de soupape (20), un moyen de fermeture (40, 60) coopérant avec le siège de soupape (20), dans lequel le moyen de fermeture est appliqué sur le siège de soupape (20) et ferme le chemin pour un liquide de l'entrée à la sortie dans une première position et est disposé à distance du siège de soupape (20) et libère le chemin de l'entrée à la sortie dans une deuxième position, et dans lequel le moyen de fermeture (40, 60) présente au moins dans la première position des faces actives en pression identiques côté entrée et côté sortie, **caractérisé en ce que** le moyen de fermeture (40, 60) comprend une buse (40) et une broche (60) et la broche (60) est menée à travers un évidement du siège de soupape (20).

2. Dispositif selon la revendication 1, **caractérisé en ce que** la buse (40) présente côté entrée une face active en pression qui est plus petite de la valeur de la face active à la pression de la broche (60) côté entrée que la face active à la pression de la buse (40) côté sortie.

3. Dispositif selon l'une quelconque des revendications 1 à 2, **caractérisé en ce que** la buse (40) est constituée d'une matière plastique.

4. Dispositif selon l'une quelconque des revendications 1 à 3, **caractérisé en ce que** le siège de soupape (20) n'est pas assemblé d'une seule pièce avec le boîtier.

5. Dispositif selon la revendication 4, **caractérisé en ce que** le siège de soupape (20) est engagé dans le boîtier (10).

6. Dispositif selon l'une quelconque des revendications 1 à 5, **caractérisé en ce que** le dispositif comprend un moyen de couplage (160) pour le couplage à un agencement de leviers (90, 100, 110) et à un corps flottant (230).

7. Dispositif selon la revendication 6, **caractérisé en ce que** le moyen de couplage (160) est solidaire du moyen de fermeture (40, 60), en particulier de la broche (60).

8. Dispositif selon l'une quelconque des revendications 1 à 7, **caractérisé en ce que** le dispositif comprend un ressort (Fig. 1, 70) pour pousser le moyen de fermeture (40, 60) dans une des deux positions.

9. Dispositif selon la revendication 8, **caractérisé en ce que** l'agencement de leviers (90, 100, 110) comprend un levier (90), qui pousse le moyen de couplage (160) respectivement dans l'autre position.

10. Dispositif selon la revendication 8 ou 9, **caractérisé en ce que** le ressort (Fig. 1, 70) est appuyé d'une part sur le moyen de couplage (160) et d'autre part sur le siège de soupape (20).

11. Dispositif selon la revendication 7, **caractérisé en ce que** le moyen de couplage (160) est relié à un éperon de fixation (90) qui, selon la position du corps flottant (230), pousse le moyen de fermeture (40, 60) dans la première position, dans la deuxième position ou dans une position intermédiaire entre la première position et la deuxième position.

12. Dispositif selon la revendication 11, **caractérisé en ce que** l'éperon de fixation (90) est relié de manière articulée au moyen de couplage (160)
